# EUROPÄISCHE PATENTSCHRIFT

(11) **EP 3 750 853 B1**
(45) Veröffentlichungstag und Bekanntmachung des Hinweises auf die Patenterteilung: **08.03.2023**
(21) Anmeldenummer: 20178229.9
(22) Anmeldetag: 04.06.2020
(51) Int. Cl.: C02F 1/52, B01D 17/02, B01D 17/04, B01D 17/12, C02F 1/40, C02F 103/32

(54) **ABSCHEIDERVORRICHTUNG MIT SENSORISCH GESTEUERTER DOSIERVORRICHTUNG**
SEPARATOR WITH SENSOR CONTROLLED METERING DEVICE
DISPOSITIF DE SÉPARATION POURVU DE DISPOSITIF DE DOSAGE À COMMANDE SENSORIELLE

(30) Priorität: 11.06.2019 DE 102019115819; 05.07.2019 DE 102019118314
(43) Veröffentlichungstag der Anmeldung: 16.12.2020
(73) Patentinhaber: Kessel AG, 85101 Lenting (DE)
(72) Erfinder: Kessel, Bernhard, 85101 Lenting (DE)
(74) Vertreter: Canzler & Bergmeier Patentanwälte Partnerschaft mbB

(56) Entgegenhaltungen:
- DE-A1- 19 541 950

## Beschreibung

Die vorliegende Erfindung betrifft eine Abscheidervorrichtung zur gebäudeseitigen Vorreinigung von Abwasser vor der Einleitung in ein öffentliches Kanalsystem, insbesondere für Nahrungsmittel verarbeitende Betriebe, mit einem Fettabscheider, einem dem Fettabscheider in Durchflussrichtung des Abwassers nachgelagerten Entnahmebecken, aus dem das gereinigte Abwasser zur Einleitung in das öffentliche Kanalsystem entnehmbar ist, einer Rückführleitung, über die dem Fettabscheider aus dem Entnahmebecken ein Teil des Abwassers rückführbar ist, und einer Dosiervorrichtung, mittels der dem rückgeführten Abwasser ein Reaktionsmittel zur Fällung und/oder Flockung zuführbar ist.

Aus der DE 195 41 950 A1 ist ein Entsorgungsfahrzeug für öl- und/oder fetthaltige Schlämme und/oder Abwässer zur Entsorgung und Regenerierung von Öl- und/oder Fettabscheideanlagen bekannt. Das Entsorgungsfahrzeug weist ein Fahrgestell auf, auf welchem eine Ansaugvorrichtung, eine Entwässerungsvorrichtung, eine Abscheidevorrichtung, eine Vorrichtung zur Messung des Klärgrades, eine Mischvorrichtung zum Einbringen von Flockungsmitteln in das vorgeklärte Wasser, eine Entwässerungsvorrichtung zur Entwässerung des bei Einbringen eines Flockungsmittels entstehenden Flotat-Schlamms, ein Sammelbehälter für das geklärte Wasser und eine Vorrichtung zur Ableitung des geklärten Wassers angeordnet sind.

Aus der DE 10 2004 014 517 A1 ist ein Schwerkraftabscheider mit Einlassöffnung für das zu behandelnde Abwasser und einem Abwasserablauf bekannt. Vom Vorbehandlungsbecken läuft das Abwasser im freien Gefälle in ein Entnahmebecken. Mittels einer Schmutzwasserpumpe wird niveaugesteuert Abwasser zu einer Flotationsanlage gefördert. Über eine Dosiervorrichtung wird in die Zuleitung zur Flotationsanlage Fällungs- und Flockungsmittel zudosiert. Dadurch werden die emulgierten lipophilen Stoffe ausgefällt.

Diese Makroflocken werden anschließend in der Flotationseinheit durch Zuführung mikroskopisch kleiner Luftblasen zum Flotieren gebracht. Der Flotatschlamm wird über die Flotatleitung abgeführt und wieder dem Schwerkraftabscheider zugeführt. Die unten ablaufende Klarwasserphase wird aus der Flotationsanlage gereinigt in das öffentliche Kanalnetz geleitet. Nachteilig hierbei ist, dass diese Anlage einen hohen Verbrauch von Fällungs- und Flockungsmittel aufweist. Jedoch weist diese Anlage sehr hohe Betriebskosten auf. Des Weiteren ist diese Anlage in der Anschaffung sehr teuer, da diese eine zusätzliche Flotationsanlage benötigt.

Aufgabe der vorliegenden Erfindung ist es somit, eine Abscheidervorrichtung zu schaffen, die sich durch reduzierte Anschaffungs- und/oder Betriebskosten auszeichnet.

Die Aufgabe wird gelöst durch eine Abscheidervorrichtung zur gebäudeseitigen Vorreinigung von Abwasser vor der Einleitung in ein öffentliches Kanalsystem, insbesondere für Nahrungsmittel verarbeitende Betriebe, sowie ein Verfahren zum Betreiben dieser Abscheidervorrichtung mit den Merkmalen der unabhängigen Patentansprüche.

Es wird eine Abscheidervorrichtung zur gebäudeseitigen Vorreinigung von Abwasser vor der Einleitung in ein öffentliches Kanalsystem, insbesondere für Nahrungsmittel verarbeitende Betriebe, vorgeschlagen. Die Abscheidervorrichtung weist einen Fettabscheider auf. In diesem Fettabscheider scheidet sich Fett vom eingeleiteten Abwasser ab, dass anschließend entfernt werden kann. Ferner umfasst die Abscheidervorrichtung ein dem Fettabscheider in Durchflussrichtung des Abwassers nachgelagertes Entnahmebecken. Aus diesem wird das gereinigte Abwasser zur Einleitung in das öffentliche Kanalsystem entnommen. Auch weist die Abscheidervorrichtung eine Rückführleitung auf, über die dem Fettabscheider aus dem Entnahmebecken ein Teil des Abwassers rückführbar ist. Die Rückführleitung verläuft vorzugsweise vom Entnahmebecken zurück zum Fettabscheider. Des Weiteren umfasst die Abscheidervorrichtung eine Dosiervorrichtung. Mittels dieser kann dem rückgeführten Abwasser ein Reaktionsmittel zur Fällung und/oder Flockung zuführt werden. Die Abscheidervorrichtung umfasst zumindest einen Sensor, mittels dem ein Volumenstrom des vom Fettabscheider in das Entnahmebecken fließenden Abwassers und/oder ein pH-Wert des Abwassers, insbesondere des in das Entnahmebecken fließenden Abwassers und/oder des sich im Entnahmebecken befindenden Abwassers, ermittelbar ist. Der Volumenstrom und/oder pH-Wert des, insbesondere dem Entnahmebecken zugeführten und/oder sich in diesem befindenden, Abwassers kann hierbei vorzugsweise unmittelbar vom Sensor erfasst oder aber auch mittelbar von einer Steuereinheit anhand der vom Sensor erfassten Messwerte berechnet werden. Der Begriff "unmittelbar" bedeutet demnach, dass der Sensor derart ausgebildet ist, dass dieser den Volumenstrom und/oder pH-Wert unmittelbar misst bzw. erfasst. Der Begriff "mittelbar" bedeutet, dass der Sensor derart ausgebildet ist, dass dieser nicht den Volumenstrom und/oder pH-Wert, sondern einen anderen Messerwert misst, mittels dem dann der Volumenstrom und/oder pH-Wert berechnet werden kann. Im Falle des Volumenstroms kann es sich hierbei beispielsweise um einen sensorisch erfassten hydrostatischen Druck oder einen Füllstandpegel handeln. Neben dem zumindest einen Sensor umfasst die Abscheidervorrichtung zusätzlich eine Steuereinheit, mit der die Dosiervorrichtung gesteuert werden kann. Die Steuereinheit ist hierfür derart ausgebildet, dass diese eine von der Dosiervorrichtung abgegebene Dosiermenge des Reaktionsmittels in Abhängigkeit des ermittelten Volumenstroms und/oder pH-Werts steuert, wobei der Volumenstrom und/oder der pH-Wert vorzugsweise unmittelbar oder mittelbar mit dem Sensor erfasst wird. Vorteilhafterweise kann hierdurch der Verbrauch von Fällungs- und Flockungsmittel reduziert und somit auch die laufenden Betriebskosten der Abscheidervorrichtung reduziert werden.

Vorteilhaft ist es, wenn die Abscheidervorrichtung einen Abwasserzulauf umfasst, über den der Abscheidervorrichtung ungereinigtes Abwasser zuführbar ist. Die Abscheidevorrichtung umfasst einen Reinigungswasserablauf, über den das durch die Abscheidervorrichtung gereinigte Abwasser dem öffentlichen Kanalsystem zuführbar ist.

Der Reinigungswasserablauf der Abscheidervorrichtung ist durch einen Entnahmebecken-Ablauf des Entnahmebeckens ausgebildet. Hierdurch kann die Abscheidervorrichtung sehr einfach und kostengünstig ausgebildet werden.

Ebenso ist es vorteilhaft, wenn der Sensor in einem dem Fettabscheider in Durchflussrichtung des Abwassers nachgelagerten Bereich der Abscheidervorrichtung angeordnet ist. Vorteilhafterweise kann somit ein vom Fettabscheider in das Entnahmebecken gerichteter Volumenstrom und/oder pH-Wert, insbesondere unmittelbar oder mittelbar, sensorisch erfasst werden.

Besonders vorteilhaft ist es, wenn der Sensor im Bereich, insbesondere in oder an, eines Fettabscheider-Ablaufs, eines Entnahmebecken-Zulaufs und/oder Verbindungsrohrs, das den Fettabscheider mit dem Entnahmebecken verbindet, angeordnet ist. Hierdurch ist eine sehr genaue und schnelle Messung des Volumenstroms und/oder pH-Werts möglich.

Ebenso bringt es Vorteile mit sich, wenn der Sensor in einem Innenraum des Entnahmebeckens angeordnet ist. Hierdurch kann die sensorische Erfassung sehr kostengünstig erfolgen.

Vorteilhaft ist es, wenn der Innenraum des Entnahmebeckens durch eine Wandung in einen Zulaufraum, in den das vom Fettabscheider kommende Abwasser über den Entnahmebecken-Zulauf zuführbar ist, und einen Entnahmeraum, aus dem das Abwasser über den Entnahmebeckenablauf abführbar ist, unterteilt ist.

Des Weiteren ist es vorteilhaft, wenn die Wandung, insbesondere in ihrem unteren Bereich, eine Verbindungsöffnung zwischen dem Zulaufraum und dem Entnahmeraum aufweist.

Auch ist es äußert vorteilhaft, wenn die Verbindungsöffnung als Drossel ausgebildet ist, so dass ein Zulaufraumpegel des Abwassers in Abhängigkeit des Volumenstroms im Vergleich zu einem Entnahmeraumpegel des Abwassers ansteigen kann.

Vorteilhaft ist es zudem, wenn der Sensor in dem Zulaufraum und/oder dem Entnahmeraum angeordnet ist. Es ist auch denkbar sowohl im Zulaufraum als auch im Entnahmeraum jeweils zumindest einen Sensor anzuordnen. Vorteilhafterweise kann somit sowohl im Zulaufraum als auch im Entnahmeraum ein Pegel des Abwassers sensorisch erfasst werden. Über eine Verrechnung kann somit ein Pegelunterschied berechnet werden, über den wiederum der Volumenstrom berechnet werden kann.

Vorteile bringt es zudem mit sich, wenn der Sensor und/oder die Steuereinheit derart ausgebildet sind, dass der Volumenstrom und/oder pH-Wert unmittelbar vom Sensor messbar ist oder mittelbar von der Steuereinheit anhand eines vom Sensor übermittelten Sensorwertes ermittelbar ist.

Auch ist es von Vorteil, wenn der Sensor ein Volumenstromsensor, ein Füllstandsensor, insbesondere ein Tauchrohr zur hydrostatischen Druckmessung und/oder eine Pegelsonde, und/oder ein pH-Wert-Sensor ist.

Vorteilhaft ist es zudem, wenn die Abscheidervorrichtung eine, insbesondere im Entnahmebecken angeordnete, Rückführpumpe aufweist, mit der das Abwasser aus dem Entnahmebecken in die Rückführleitung pumpbar ist. Vorteilhafterweise kann somit das rückgeführte Abwasser mit Druck durch die Rückführleitung gepumpt werden, wodurch eine bessere Durchmischung mit dem Reaktionsmittel und/oder eine bessere Anreicherung mit Luft erfolgen kann. Bei partiellem Druckabfall wird im rückgeführten Abwasser gebundener Sauerstoff freigesetzt, der dann wiederum die Ausflockung im Fettabscheider verbessert.

Dabei kann die Rückführpumpe auch von der Steuereinheit gesteuert werden. Beispielsweise kann die Steuereinheit die Rückführpumpe in Abhängigkeit des Volumenstroms und/oder pH-Werts steuern. Zusätzlich oder alternativ kann die Steuereinheit die Rückführpumpe auch in Abhängigkeit des Entnahmeraumpegels im Entnahmeraum steuern. Steigt beispielsweise der Entnahmeraumpegel kann die Steuereinheit die Leistung der Rückführpumpe steigern, so dass der Entnahmeraumpegel zumindest konstant bleibt oder sogar sinkt.

Vorteilhaft ist es, wenn die Steuereinheit derart ausgebildet ist, dass diese die Dosiervorrichtung und/oder die Rückführpumpe beim Überschreiten eines ersten Sensorschwellwerts, insbesondere des Sensorwertes, des Volumenstroms und/oder des pH-Werts, einschaltet und beim Unterschreiten eines zweiten Sensorschwellwerts ausschaltet, wobei der zweite Sensorschwellwert kleiner als der erste Sensorschwellwert ist.

Auch ist es vorteilhaft, wenn in der Steuereinheit ein Pumpenvolumenstrom der Rückführpumpe abgespeichert ist. Zusätzlich oder alternativ ist es vorteilhaft, wenn die Steuereinheit derart ausgebildet ist, dass diese nach dem Überschreiten des ersten Sensorschwellwerts den abgespeicherten Pumpenvolumenstrom vom sensorisch erfassten Volumenstrom subtrahiert. Hierdurch kann ein bereinigter Volumenstrom berechnet werden. Dieser entspricht dann dem in die Abscheidervorrichtung zugelaufenen Volumenstrom. Vorzugsweise ist die Steuereinheit derart ausgebildet, dass sie diesen vorstehenden Korrekturschritt verzögert, erst nach einer vordefinierten und/oder in der Steuereinheit abgespeicherten Zeit, durchführt.

Vorzugsweise ist die Steuereinheit derart ausgebildet, dass diese die Rückführpumpe und/oder die Dosiervorrichtung bei einem pH-Wert von kleiner 7 und/oder bei einem den ersten Sensorschwellwert übersteigenden Volumenstrom aktiviert. Vorzugsweise ist die Steuereinheit derart ausgebildet, dass diese bei steigendem Volumenstrom und/oder bei fallendem pH-Wert die Dosiermenge der Dosiervorrichtung erhöht.

Vorteilhaft ist es, wenn die Abscheidervorrichtung derart ausgebildet ist, dass die Ausflockung im Fettabscheider - und nicht in der Rückführleitung und/oder in der Wirbelkammer - erfolgt.

Besondere Vorteile bringt es mit sich, wenn die Rückführleitung an den Entnahmeraum und/oder ein Zulaufrohr des Abwasserzulaufs und/oder des Fettabscheiders angeschlossen ist.

Vorteilhaft ist es zudem, wenn die Abscheidervorrichtung eine in der Rückführleitung angeordnete Wirbelkammer aufweist. Hierdurch kann die Durchmischung und die Freisetzung von Sauerstoff noch weiter verbessert werden.

Vorteilhaft ist es, wenn die Dosiervorrichtung derart ausgebildet ist, dass diese das Reaktionsmittel in die Rückführleitung, insbesondere in einem in Durchflussrichtung vor der Wirbelkammer liegenden Abschnitt, oder in die Wirbelkammer einleitet.

Auch ist es von Vorteil, wenn die Wirbelkammer einen im Vergleich zur Rückführleitung größeren Durchmesser aufweist. Hierdurch können Turbulenzen hervorgerufen werden, die eine gute Durchmischung begünstigen.

Vorteilhaft ist es, wenn die Abscheidervorrichtung eine in der Rückführleitung und/oder in der Wirbelkammer angeordnete Durchflussverengung aufweist, mittels der Wirbel zum Vermischen des Reaktionsmittels mit dem rückgeführten Abwasser erzeugbar sind. Vorzugsweise ist der Durchflussverengung in Durchflussrichtung eine Durchflusserweiterung nachgelagert. Vorzugsweise ist die Durchflussverengung als Blende oder Venturi-Düse ausgebildet.

Vorteile bringt es zudem mit sich, wenn die Rückführleitung und/oder die Wirbelkammer eine Zwischenwand mit einer derartigen Durchflussverengung aufweist. Auch hierdurch kann eine Durchmischung verbessert werden.

Vorgeschlagen wird ein Verfahren zum Betreiben einer Abscheidervorrichtung zur gebäudeseitigen Vorreinigung von Abwasser vor der Einleitung in ein öffentliches Kanalsystem, insbesondere für Nahrungsmittel verarbeitende Betriebe. Bei dem Verfahren wird Abwasser in einen Fettabscheider eingeleitet, in dem sich vom Abwasser Fett an der Wasseroberfläche abscheidet. Anschließend wird das Abwasser in ein dem Fettabscheider in Durchflussrichtung des Abwassers nachgelagertes Entnahmebecken eingeleitet. In diesem wird das Abwasser beruhigt, so dass sich Sedimente am Boden des Entnahmebeckens absetzten können. Anschließend wird das gereinigte Abwasser aus dem Entnahmebecken in das öffentliche Kanalsystem eingeleitet. In einem dazu parallelen Verfahrensschritt wird dem Fettabscheider aus dem Entnahmebecken ein Teil des Abwassers über eine Rückführleitung rückgeführt. Hierbei wird dem rückgeführten Abwasser über einer Dosiervorrichtung ein Reaktionsmittel zur Fällung und/oder Flockung beigemischt und/oder zugeführt. Das Verfahren wird mit einer Abscheidervorrichtung gemäß der vorangegangenen Beschreibung durchgeführt, wobei die genannten Verfahrensmerkmale einzeln oder in beliebiger Kombination durchgeführt werden.

Weitere Vorteile der Erfindung sind in den nachfolgenden Ausführungsbeispielen beschrieben. Es zeigt:

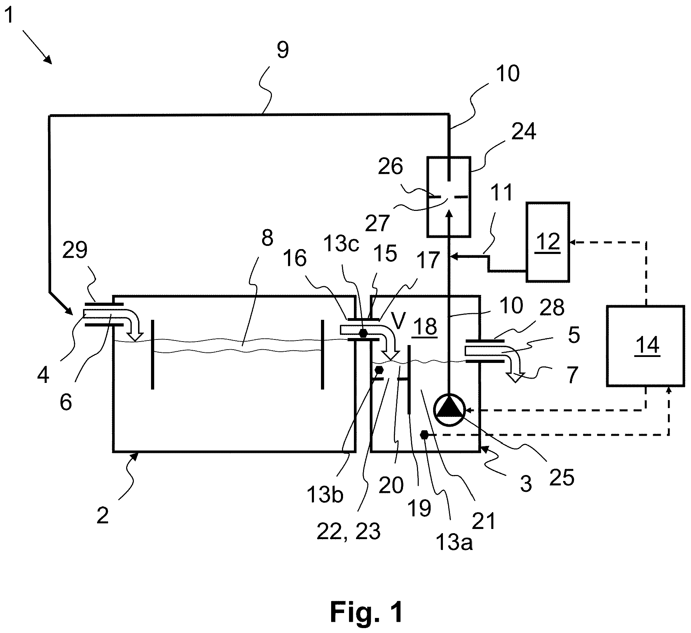

- **Figur** 1: eine schematische Darstellung einer Abscheidervorrichtung.

Zur gebäudeseitigen Vorreinigung von Abwasser 6 wir die Abscheidervorrichtung 1 verwendet. Insbesondere bei Nahrungsmittel verarbeitenden Betrieben, wie beispielsweise Restaurantbetrieben oder Fleischereibetrieben, ist es erforderlich, das Abwasser insbesondere von Fett 8 vorzureinigen, bevor dieses in ein öffentliches Kanalsystem eingeleitet wird. In Figur 1 ist eine derartige Abscheidervorrichtung 1 schematisch dargestellt.

Die Abscheidervorrichtung 1 umfasst einen Fettabscheider 2 und ein dem Fettabscheider 2 in Durchflussrichtung des Abwassers 6 nachgelagertes Entnahmebecken 3. Über einen Abwasserzulauf 4 wird der Abscheidervorrichtung 1 das verdreckte Abwasser 6 zugeführt. Das Abwasser 6 durchläuft zunächst den Fettabscheider 2 und anschließend das Entnahmebecken 3. Über einen Reinigungswasserablauf 5 der Abscheidervorrichtung 1 wird das gereinigte Abwasser 7 dem vorliegend nicht dargestellten Kanalsystem zugeführt. Der Reinigungswasserablauf 5 der Abscheidervorrichtung 1 bildet den Entnahmebecken-Ablauf 28 des Entnahmebeckens 3. Das Abwasser 6 fließt somit verdreckt in den Fettabscheider 2 hinein, wird dort teilweise von Fett 8, das sich an der Wasseroberfläche absetzt, gereinigt, wird dann in das Entnahmebecken 3 überführt, in dem sich Schlick am Boden absetzt, und verlässt dann als gereinigtes Abwasser 7 über den Reinigungswasserablauf 5, der vorliegend durch den Entnahmebecken-Ablauf 28 ausgebildet ist, die Abscheidervorrichtung 1.

Wie aus Figur 1 hervorgeht, umfasst die Abscheidervorrichtung 1 zusätzlich eine Rückführleitung 9. Die Rückführleitung 9 ist mit dem Entnahmebecken 3 verbunden. Über die Rückführleitung 9 kann ein Teil des bereits vom Fettabscheider 2 von Fett 8 und/oder vom Entnahmebecken 3 von sich absetzenden Schlick teilweise gereinigten Abwassers 7 aus dem Entnahmebecken 3 wieder abgeführt und dem Fettabscheider 2 rückgeführt werden. Hierfür kann die Rückführleitung 9 mit einem Zulaufrohr 29, insbesondere des Abwasserzulaufs 4 und/oder des Fettabscheiders 2, verbunden sein. Bei dieser Rückführung wird dem rückgeführten Abwasser 10 ein Reaktionsmittel 11 zur Fällung und/oder Flockung zugeführt. Hierfür weist die Abscheidervorrichtung 1 eine Dosiervorrichtung 12 auf.

Um situationadäquat die richtige Dosiermenge des Reaktionsmittels 11 zuführen zu können, umfasst die Abscheidervorrichtung 1 zumindest einen Sensor 13 und eine Steuereinheit 14. Die Steuereinheit 14 ist mit dem zumindest einen Sensor 13 und der Dosiervorrichtung 12, insbesondere elektrisch, hydrostatisch und/oder mechanisch, verbunden. Mit dem Sensor 13 ist ein Volumenstrom V vom Fettabscheider 2 in das Entnahmebecken 3 des vorgereinigten Abwassers 7 und/oder ein pH-Wert des vorgereinigten Abwassers 7, insbesondere des vom Fettabscheider 2 in das Entnahmebecken 3 fließenden und/oder des sich in dem Entnahmebecken 3 befindenden vorgereinigten Abwassers 7, ermittelbar.

Die Steuereinheit 14 ist derart ausgebildet, dass diese die Dosiervorrichtung 12 in Abhängigkeit des ermittelten Volumenstroms V und/oder pH-Werts derart steuert, dass stets eine ausreichende Menge des Reaktionsmittels 11 dem rückgeführten Abwasser 10 zugeführt wird. Hierfür kann in der Steuereinheit 14 eine, insbesondere zuvor empirisch ermittelte, Liste abgespeichert sein, die den Zusammenhang zwischen zum einen dem Volumenstrom V und/oder dem pH-Wert und zum anderen der abzugebenden Menge des Reaktionsmittels 11 wiedergibt. In Abhängigkeit des ermittelten Volumenstroms V und/oder pH-Werts kann die Steuereinheit 14 aus der Liste die erforderliche Zugabemenge des Reaktionsmittels 11 ermitteln. Alternativ oder zusätzlich kann in der Speichereinheit 14 ein mathematisches Modell abgespeichert sein, mittels dem anhand des erfassten Volumenstroms V und/oder pH-Werts die notwendige Menge des Reaktionsmittels 11 berechnet wird. Durch diese gesteuerte Zugabe des Reaktionsmittels 11 kann ein unverhältnismäßig hoher Verbrauch an teurem Reaktionsmittel 11 vermieden werden. Infolgedessen reduzieren sich die Betriebskosten der Abscheidervorrichtung 1.

Wie aus Figur 1 hervorgeht, ist der zumindest eine Sensor 13 in einem dem Fettabscheider 2 in Durchflussrichtung des Abwassers 4 nachgelagerten Bereich der Abscheidervorrichtung 1 angeordnet. Mit einem ersten Sensor 13a, einem zweiten Sensor 13b und einem Dritten Sensor 13c sind drei unterschiedliche Orte in der Abscheidervorrichtung 1 visualisiert, an von zumindest einem von diesen zumindest ein Sensor 13, insbesondere zur mittelbaren und/oder unmittelbaren Ermittlung des Volumenstroms V und/oder des pH-Werts, angeordnet sein kann. Der Sensor 13 kann auch derart ausgebildet sein, dass dieser sowohl den Volumenstrom V als auch den pH-Wert ermitteln kann. Die Abscheidervorrichtung 1 kann einen oder mehrere Sensoren 13 aufweisen. Des Weiteren kann zumindest ein Sensor 13, insbesondere zur mittelbaren und/oder unmittelbaren Ermittlung des Volumenstroms V und/oder des pH-Werts, an einem oder mehreren mit den Bezugszeichen 13a, 13b, 13c kenntlichgemachten Orten der Abscheidervorrichtung 1 angeordnet sein. Die unterschiedlichen Orte 13a, 13b, 13c werden nachfolgend noch genau spezifiziert.

Der Fettabscheider 2 und das Entnahmebecken 3 sind über ein Verbindungsrohr 15 miteinander verbunden. Gemäß dem angedeuteten Ort 13c kann der Sensor 13 im Bereich dieses Verbindungsrohrs 15 angeordnet sein. So kann der Sensor 13 beispielsweise in oder an einem Fettabscheider-Ablauf 16, einem Entnahmebecken-Zulauf 17 oder aber auch im Verbindungsrohrs 15 selbst angeordnet sein.

Zusätzlich oder alternativ kann ein Sensor 13 auch zumindest an einem der nachfolgenden Orte 13a, 13b der Abscheidervorrichtung 1 angeordnet sein, nämlich insbesondere in einem Innenraum 18 des Entnahmebeckens 3.

Gemäß dem vorliegenden Ausführungsbeispiel ist der Innenraum 18 des Entnahmebeckens 3 durch eine Wandung 19 in einen Zulaufraum 20 und einen Entnahmeraum 21 unterteilt. Die Wandung 19 kann, wie dargestellt, als Tauchwand oder aber auch als eintauchendes Rohr ausgebildet sein. Die Wandung 19 umfasst gemäß dem dargestellten Ausführungsbeispiel einen Boden. Dieser erstreckt sich zwischen der Tauchwand und der Innenwand des Entnahmebeckens 3. Der Zulaufraum 20 ist somit, insbesondere durch den Boden und die Tauchwand, abgeschlossen.

Die Wandung 19 weist eine Verbindungsöffnung 22 zwischen dem Zulaufraum 20 und dem Entnahmeraum 21 auf. Die Verbindungsöffnung 22 wirkt als Drossel 23 oder ist als solche ausgebildet. Das vom Fettabscheider 2 kommende Abwasser 6 gelangt somit über den Entnahmebecken-Zulauf 17 in den Zulaufraum 20. Aufgrund der Verbindungsöffnung 22 kann ein Zulaufraumpegel des Abwassers 6 in Abhängigkeit des Volumenstroms V im Vergleich zu einem Entnahmeraumpegel des Abwassers 6 im Entnahmeraum 21 ansteigen. Über einen im Zulaufraum 20 am Ort 13b angeordneten Sensor 13 und/oder über einen im Entnahmeraum 21 am Ort 13a angeordneten Sensor 13 kann eine entsprechende Pegeländerung sensorisch erfasst werden. Diese kann, insbesondere von der Steuereinheit 14, dazu genutzt werden, um den Volumenstrom V zu ermitteln, insbesondere zu berechnen.

Gemäß der vorangegangenen Beschreibung kann der Sensor 13 und/oder die Steuereinheit 14 derart ausgebildet sein, dass der Volumenstrom V und/oder der pH-Wert unmittelbar vom Sensor 13 messbar ist oder mittelbar von der Steuereinheit 14 anhand des von dem zumindest einen Sensor 13 übermittelten Sensorwertes ermittelbar ist.

Für die unmittelbare Erfassung des Volumenstroms V ist es vorteilhaft, wenn der Sensor 13 ein Volumenstromsensor ist. In diesem Fall ist der Sensor vorzugsweise im Bereich des mit dem Bezugszeichen 13c gekennzeichneten Ortes positioniert, d.h. insbesondere im Bereich des Verbindungsrohrs 15, vorzugsweise in oder an dem Fettabscheider-Ablauf 16, in oder an dem Entnahmebecken-Zulauf 17 und/oder in oder an dem Verbindungsrohr 15.

Insbesondere bei Verwendung eines Sensors 13, der nicht in der Lage ist, den Volumenstrom V und/oder den pH-Wert unmittelbar erfassen zu können, sondern einen anderen Wert misst, ist es vorteilhaft, wenn dieser im Innenraum 18 des Entnahmebeckens 3 angeordnet ist. Hierfür ist zumindest ein Sensor 13 an zumindest einem der mit dem Bezugszeichen 13a, 13b angedeuteten Orte positioniert. Bei einem solchen Sensor handelt es sich vorzugsweise um einen Füllstandsensor. Der Füllstandsensor kann insbesondere ein Tauchrohr zur hydrostatischen Druckmessung und/oder eine Pegelsonde sein.

Um eine gute Durchmischung des über die Rückführleitung 9 rückgeführten Abwassers 10 mit dem Reaktionsmittel 11 gewährleisten zu können und/oder um Sauerstoff aus dem rückgeführten Abwasser 10 herauslösen zu können, ist es vorteilhaft, wenn die Abscheidervorrichtung 1 im Bereich der Rückführleitung 9 eine Durchflussverengung 27 aufweist. Die Durchflussverengung 27 kann durch eine Blende oder eine Venturi-Düse ausgebildet sein. Gemäß einem vorliegend nicht dargestellten Ausführungsbeispiel kann die Durchflussverengung 27 direkt in der Rückführleitung 9 ausgebildet, insbesondere in diese eingeschoben sein.

Zusätzlich oder alternativ kann die Abscheidervorrichtung 1 eine Wirbelkammer 24 aufweist. Die Wirbelkammer 24 ist in der Rückführleitung 9 angeordnet. Infolgedessen ist die Rückführleitung 9 über einen Einlauf und einen Auslauf mit der Wirbelkammer 24 verbunden. Die Wirbelkammer 24 weist ausschließlich einen durch diesen Auslauf gebildeten, wieder in die Rückführleitung 9 führenden Ausgang auf. Es ist nicht möglich das rückgeführte Abwasser 10 aus der Wirbelkammer 24 in ein öffentliches Kanalsystem abzuführen.

Die Dosiervorrichtung 12 ist in Rückführrichtung vor der Durchflussverengung 27 und/oder gemäß dem in Figur 1 dargestellten Ausführungsbeispiel vor der Wirbelkammer 24 an die Rückführleitung 9 angeschlossen. Alternativ ist es aber auch ebenso denkbar, dass die Dosiervorrichtung 12 direkt an die Wirbelkammer 24 angeschlossen ist und infolgedessen das Reaktionsmittel 11 unmittelbar in die Wirbelkammer 24 einleitet.

Ferner umfasst die Abscheidervorrichtung 1 eine an die Rückführleitung 9 angeschlossene Rückführpumpe 25. Mittels dieser kann das rückgeführte Abwasser 10 mit Druck durch die Rückführleitung 9 und/oder in die Wirbelkammer 24 gepumpt werden.

Die Rückführpumpe 25 ist hier auch mit der Steuereinheit 14 verbunden, so dass diese von der Steuereinheit 14 gesteuert werden kann. Beispielsweise kann die Rückführpumpe 25 von der Steuereinheit 14 in Abhängigkeit des Volumenstroms V und/oder des pH-Werts gesteuert werden. Die Steuereinheit 14 kann eine Leistung, insbesondere eine Pumpleistung, der Rückführpumpe 25 derart steuern, dass die Rückführpumpe 25 in etwa so viel pumpt, wie der Volumenstrom V ist. Zusätzlich oder alternativ kann die Rückführpumpe 25 auch in Abhängigkeit des Entnahmeraumpegels von der Steuereinheit 14 gesteuert werden. Steigt der Pegel im Entnahmeraum 3, kann die Rückführpumpe 25 mit höherer Leistung gesteuert werden.

Zur guten Durchmischung und/oder Luftanreicherung weist die Wirbelkammer 24 im Vergleich zur Rückführleitung 9 einen größeren Querschnitt auf. Hierdurch entstehen beim druckbeaufschlagten Eintritt des rückgeführten Abwassers 10 in die Wirbelkammer 24 Turbulenzen, die eine gute Durchmischung sicherstellen. Eine zusätzliche Verbesserung der Durchmischung und/oder Luftanreicherung kann dadurch erzielt werden, wenn die Wirbelkammer, wie in Figur 1 dargestellt, eine Zwischenwand 26 mit einer Durchflussverengung 27 aufweist. Alternativ könnte auch eine Venturi-Düse in der Wirbelkammer 24 und/oder oder unmittelbar in der Rückführleitung 9 angeordnet sein.

Die vorliegende Erfindung ist nicht auf das dargestellte und beschriebene Ausführungsbeispiel beschränkt. Abwandlungen im Rahmen der Patentansprüche sind ebenso möglich wie eine Kombination der Merkmale, auch wenn sie in unterschiedlichen Ausführungsbeispielen dargestellt und beschrieben sind.

### Bezugszeichenliste

- 1: Abscheidervorrichtung
- 2: Fettabscheider
- 3: Entnahmebecken
- 4: Abwasserzulauf
- 5: Reinigungswasserablauf
- 6: Abwasser
- 7: gereinigte Abwasser
- 8: Fett
- 9: Rückführleitung
- 10: rückgeführtes Abwasser
- 11: Reaktionsmittel
- 12: Dosiervorrichtung
- 13: Sensor
- 14: Steuereinheit
- 15: Verbindungsrohrs
- 16: Fettabscheider-Ablaufs
- 17: Entnahmebecken-Zulaufs
- 18: Innenraum
- 19: Wandung
- 20: Zulaufraum
- 21: Entnahmeraum
- 22: Verbindungsöffnung
- 23: Drossel
- 24: Wirbelkammer
- 25: Rückführpumpe
- 26: Zwischenwand
- 27: Durchflussverengung
- 28: Entnahmebecken-Ablauf
- 29: Zulaufrohr
- V: Volumenstrom vom Fettabscheider zum Entnahmebecken

## Patentansprüche

1. Abscheidervorrichtung (1) zur gebäudeseitigen Vorreinigung von Abwasser (6) vor der Einleitung in ein öffentliches Kanalsystem mit einem Fettabscheider (2),
einem dem Fettabscheider (2) in Durchflussrichtung des Abwassers (6) nachgelagerten Entnahmebecken (3), aus dem über einen Reinigungswasserablauf (5), der durch einen Entnahmebecken-Ablauf (28) des Entnahmebeckens (3) ausgebildet ist, das gereinigte Abwasser (7) zur Einleitung in das öffentliche Kanalsystem entnehmbar ist, einer Rückführleitung (9), die vom Entnahmebecken (3) zurück zum Fettabscheider (2) verläuft und über die dem Fettabscheider (2) aus dem Entnahmebecken (3) ein Teil des Abwassers (7) rückführbar ist, und
einer Dosiervorrichtung (12), mittels der dem rückgeführten Abwasser (6) ein Reaktionsmittel (11) zur Fällung und/oder Flockung zuführbar ist,
wobei die Abscheidervorrichtung (1) zumindest einen Sensor (13) umfasst, mittels dem ein Volumenstrom (V) des vom Fettabscheider (2) in das Entnahmebecken (3) fließenden Abwassers (6) und/oder ein pH-Wert des Abwassers (6) ermittelbar ist, und
dass die Abscheidervorrichtung (1) eine Steuereinheit (14) umfasst, die derart ausgebildet ist, dass diese eine von der Dosiervorrichtung (12) abgegebene Dosiermenge des Reaktionsmittels (11) in Abhängigkeit des ermittelten Volumenstroms (V) und/oder pH-Werts steuert.

2. Abscheidervorrichtung nach dem vorherigen Anspruch, **dadurch gekennzeichnet, dass** die Abscheidervorrichtung (1) einen Abwasserzulauf (4), über den der Abscheidervorrichtung (1) ungereinigtes Abwasser (6) zuführbar ist.

3. Abscheidervorrichtung nach einem oder mehreren der vorherigen Ansprüche, **dadurch gekennzeichnet, dass** der Sensor (13) in einem dem Fettabscheider (2) in Durchflussrichtung des Abwassers (6) nachgelagerten Bereich der Abscheidervorrichtung (1) angeordnet ist, insbesondere im Bereich eines Fettabscheider-Ablaufs (16), eines Entnahmebecken-Zulaufs (17) und/oder Verbindungsrohrs (15), das den Fettabscheider (2) mit dem Entnahmebecken (3) verbindet.

4. Abscheidervorrichtung nach einem oder mehreren der vorherigen Ansprüche, **dadurch gekennzeichnet, dass** der Sensor (13) in einem Innenraum (18) des Entnahmebeckens (3) angeordnet ist,
wobei der Innenraum (18) des Entnahmebeckens (3) vorzugsweise durch eine Wandung (19) in einen Zulaufraum (20), in den das vom Fettabscheider (2) kommende Abwasser (6) über den Entnahmebecken-Zulauf (17) zuführbar ist, und einen Entnahmeraum (21), aus dem das gereinigte Abwasser (7) über den Entnahmebecken-Ablauf (28) abführbar ist, unterteilt ist.

5. Abscheidervorrichtung nach dem vorherigen Anspruch, **dadurch gekennzeichnet, dass** die Wandung (19), insbesondere in ihrem unteren Bereich, eine Verbindungsöffnung (22) zwischen dem Zulaufraum (20) und dem Entnahmeraum (21) aufweist.

6. Abscheidervorrichtung nach dem vorherigen Anspruch, **dadurch gekennzeichnet, dass** die Verbindungsöffnung (22) als Drossel (23) ausgebildet ist, so dass ein Zulaufraumpegel des Abwassers (6) in Abhängigkeit des Volumenstroms (V) im Vergleich zu einem Entnahmeraumpegel des Abwassers (6) ansteigen kann.

7. Abscheidervorrichtung nach einem oder mehreren der vorherigen Ansprüche 4 bis 6, **dadurch gekennzeichnet, dass** der Sensor (13) in dem Zulaufraum (20) und/oder dem Entnahmeraum (21) angeordnet ist.

8. Abscheidervorrichtung nach einem oder mehreren der vorherigen Ansprüche, **dadurch gekennzeichnet, dass** der Sensor (13) und/oder die Steuereinheit (14) derart ausgebildet sind, dass der Volumenstrom (V) und/oder der pH-Wert unmittelbar vom Sensor (13) messbar ist oder mittelbar von der Steuereinheit (14) anhand eines vom Sensor (13) übermittelten Sensorwertes ermittelbar ist.

9. Abscheidervorrichtung nach einem oder mehreren der vorherigen Ansprüche, **dadurch gekennzeichnet, dass** die Abscheidervorrichtung (1) eine Rückführpumpe (25) aufweist, mit der das Abwasser (7) aus dem Entnahmebecken (3) in die Rückführleitung (9) pumpbar ist, wobei die Rückführpumpe (25) vorzugsweise von der Steuereinheit (14), insbesondere in Abhängigkeit des Volumenstroms (V), pH-Werts und/oder des Entnahmeraumpegels im Entnahmebecken (3), steuerbar ist.

10. Abscheidervorrichtung nach einem oder mehreren der vorherigen Ansprüche, **dadurch gekennzeichnet, dass** die Steuereinheit (14) derart ausgebildet ist, dass diese die Dosiervorrichtung (12) und/oder die Rückführpumpe (25) beim Überschreiten eines ersten Sensorschwellwerts des Sensors (13) einschaltet und beim Unterschreiten eines zweiten Sensorschwellwerts des Sensors (13) ausschaltet, wobei der zweite Sensorschwellwert kleiner als der erste Sensorschwellwert ist.

11. Abscheidervorrichtung nach einem oder mehreren der vorherigen Ansprüche, **dadurch gekennzeichnet, dass** in der Steuereinheit (14) ein Pumpenvolumenstrom der Rückführpumpe (25) abgespeichert ist und/oder
dass die Steuereinheit (14) derart ausgebildet ist, dass diese nach dem Überschreiten des ersten Sensorschwellwerts des Sensors (13) zur Ermittlung eines bereinigten Volumenstroms den abgespeicherten Pumpenvolumenstrom vom sensorisch erfassten Volumenstrom (V) subtrahiert.

12. Abscheidervorrichtung nach einem oder mehreren der vorherigen Ansprüche, **dadurch gekennzeichnet, dass** die Abscheidervorrichtung (1) eine in der Rückführleitung (9) angeordnete Wirbelkammer (24) aufweist.

13. Abscheidervorrichtung nach einem oder mehreren der vorherigen Ansprüche, **dadurch gekennzeichnet, dass** die Dosiervorrichtung (12) derart ausgebildet ist, dass diese das Reaktionsmittel (11) in die Rückführleitung (9) oder in die Wirbelkammer (24) einleitet.

14. Abscheidervorrichtung nach einem oder mehreren der vorherigen Ansprüche, **dadurch gekennzeichnet, dass** die Abscheidervorrichtung (1) eine in der Rückführleitung (9) und/oder in der Wirbelkammer (24) angeordnete Durchflussverengung (27) aufweist, mittels der Wirbel zum Vermischen des Reaktionsmittels (11) mit dem rückgeführten Abwasser (10) erzeugbar sind.

15. Verfahren zum Betreiben einer Abscheidervorrichtung (1) zur gebäudeseitigen Vorreinigung von Abwasser (6) vor der Einleitung in ein öffentliches Kanalsystem,
bei dem Abwasser (6) in einen Fettabscheider (2) eingeleitet wird, das Abwasser (6) in ein dem Fettabscheider (2) in Durchflussrichtung des Abwassers (6) nachgelagertes Entnahmebecken (3) eingeleitet wird und
das gereinigte Abwasser (7) aus dem Entnahmebecken (3) in das öffentliche Kanalsystem eingeleitet wird,
wobei dem Fettabscheider (2) aus dem Entnahmebecken (3) ein Teil des gereinigten Abwassers über eine Rückführleitung rückgeführt wird und
wobei dem rückgeführten Abwasser (10) über einer Dosiervorrichtung (12) ein Reaktionsmittel (11) zur Fällung und/oder Flockung zugeführt wird,
wobei das Verfahren mit einer Abscheidervorrichtung (1) nach einem oder mehreren der vorherigen Ansprüche durchgeführt wird.

## Claims

1. A separation device (1) for pre-cleaning wastewater (6) in a building prior to introducing into a public sewer system,
having a fat separator (2),
a removal basin (3) downstream of the fat separator (2) in the flow direction of the wastewater (6), from which the cleaned wastewater (7) can be removed for introducing into the public sewer system via a cleaned water drain (5) formed by a removal basin drain (28) of the removal basin (3),
a return line (9), leading from the removal basin (3) back to the fat separator (2), by means of which part of the wastewater (7) from the removal basin (3) can be returned to the fat separator (2), and
a dosing device (12) by means of which a reaction agent (11) for precipitating and/or flocculating can be fed into the returned wastewater (6),
wherein
the separation device (1) comprises at least one sensor (13) by means of which a volume flow rate (V) of the wastewater (6) flowing from the fat separator (2) into the removal basin (3) and/or a pH value of the wastewater (6) can be determined, and
that the separation device (1) comprises a control unit (14) designed such that said control unit (14) controls a metered amount of the reaction agent (11) dispensed by the dosing device (12) as a function of the determined volume flow rate (V) and/or pH value.

2. The separation device according to the preceding claim, **characterized in that** the separation device (1) comprises a wastewater inlet (4) by means of which uncleaned wastewater (6) can be fed to the separation device (1).

3. The separation device according to any one or more of the preceding claims, **characterized in that** the sensor (13) is disposed in a region of the separation device (1) downstream of the fat separator (2) in the flow direction of the wastewater (6), particularly in the region of a fat separator outlet (16), of a removal basin inlet (17), and/or of a connecting pipe (15) connecting the fat separator (2) to the removal basin (3).

4. The separation device according to any one or more of the preceding claims, **characterized in that** the sensor (13) is disposed in an interior (18) of the removal basin (3),
wherein the interior (18) of the removal basin (3) is divided by a wall (19) into an inlet chamber (20) into which the wastewater (6) coming from the fat separator (2) can be fed by means of the removal basin inlet (17), and a removal chamber (21) from which the cleaned wastewater (7) can be discharged by means of the removal basin outlet (28).

5. The separation device according to the preceding claim, **characterized in that** the wall (19), particularly in the lower region thereof, comprises a connecting opening (22) between the inlet chamber (20) an the removal chamber (21).

6. The separation device according to the preceding claim, **characterized in that** the connecting opening (22) is implemented as a throttle (23), so that an inlet chamber level of the wastewater (6) can rise as a function of the volume flow rate (V) in comparison with a removal chamber level of the wastewater (6).

7. The separation device according to any one or more of the preceding claims 4 to 6, **characterized in that** the sensor (13) is disposed in the inlet chamber (20) and/or in the removal chamber (21).

8. The separation device according to any one or more of the preceding claims, **characterized in that** the sensor (13) and/or the control unit (14) are implemented such that the volume flow rate (V) and/or the pH value can be measured directly by the sensor (13), or
can be determined indirectly by the control unit (14) by means of a sensor value transmitted by the sensor (13).

9. The separation device according to any one or more of the preceding claims, **characterized in that** the separation device (1) comprises a return pump (25) by means of which the wastewater (7) from the removal basin (3) can be pumped into the return line (9), wherein the return pump (25) can preferably be controlled by the control unit (14), particularly as a function of the volume flow rate (V), the pH value, and/or the removal chamber level in the removal basin (3).

10. The separation device according to any one or more of the preceding claims, **characterized in that** the control unit (14) is implemented such that said unit switches on the dosing device (12) and/or the return pump (25) when a first sensor threshold value is exceeded, and switches off said device when a value falls below a second sensor threshold value, wherein the second sensor threshold value is less than the first sensor threshold value.

11. The separation device according to any one or more of the preceding claims, **characterized in that** a pump volume flow rate of the return pump (25) is saved in the control unit (14), and/or
that the control unit (14) is implemented such that said unit subtracts the saved pump volume flow rate from the volume flow rate (V) captured by the sensor after the first sensor threshold value has been exceeded, in order to determine a cleaned volume flow rate.

12. The separation device according to any one or more of the preceding claims, **characterized in that** the separation device (1) comprises a swirl chamber (24) disposed in the return line (9).

13. The separation device according to any one or more of the preceding claims, **characterized in that** the dosing device (12) is implemented such that said device introduces the reaction agent (11) into the return line (9) or into the swirl chamber (24).

14. The separation device according to any one or more of the preceding claims, **characterized in that** the separation device (1) comprises a flow constriction (27) disposed in the return line (9) and/or in the swirl chamber (24), by means of which vortices can be generated for mixing the reaction agent (11) with the returned wastewater (10).

15. A method for operating a separation device (1) for pre-cleaning
wastewater (6) in a building prior to introducing into a public sewer system,
wastewater (6) being introduced into a fat separator (2),
the wastewater (6) being introduced into a removal basin (3) connected downstream of the fat separator (2) in the flow direction of the wastewater (6), and
the cleaned wastewater (7) from the removal basin (3) being introduced into the public sewer system,
part of the cleaned wastewater from the removal basin (3) being returned to the fat separator (2) by means of a return line, and
a reaction agent (11) for precipitating and/or flocculating being fed into the returned wastewater (10) by means of a dosing device (12),
wherein
the method is performed by means of a separation device (1) according to any one or more of the preceding claims.

## Revendications

1. Dispositif de séparateur (1) pour la pré-épuration côté bâtiment d'eaux usées (6) avant leur introduction dans un système de canalisation public,
avec un séparateur de graisse (2),
un bassin de prélèvement (3) disposé en aval du séparateur de graisse (2) dans la direction d'écoulement des eaux usées (6), à partir duquel les eaux usées épurées (7) peuvent être prélevées pour être introduites dans le système de canalisation public par l'intermédiaire d'un écoulement d'eau d'épuration (5) qui est formé par un écoulement de bassin de prélèvement (28) du bassin de prélèvement (3),
une conduite de retour (9) qui s'étend du bassin de prélèvement (3) en retour au séparateur de graisse (2) et par laquelle une partie des eaux usées (7) peut être renvoyée au séparateur de graisse (2) à partir du bassin de prélèvement (3), et
un dispositif de dosage (12), au moyen duquel un réactif (11) peut être ajouté aux eaux usées (6) recyclées pour la précipitation et/ou la floculation,
dans lequel le dispositif de séparateur (1) comprend au moins un capteur (13) au moyen duquel un débit volumique (V) des eaux usées (6) s'écoulant du séparateur de graisse (2) dans le bassin de prélèvement (3) et/ou une valeur de pH des eaux usées (6) peut/peuvent être déterminé(s), et
le dispositif de séparateur (1) comprend une unité de commande (14) qui est conçue de sorte que celle-ci commande une quantité de dosage du réactif (11) délivrée par le dispositif de dosage (12) en fonction du débit volumique (V) et/ou de la valeur de pH déterminé(s).

2. Dispositif de séparateur selon la revendication précédente, **caractérisé en ce que** le dispositif de séparateur (1) comprend une arrivée d'eaux usées (4) par laquelle des eaux usées (6) non épurées peut être introduites au dispositif de séparateur (1).

3. Dispositif de séparateur selon l'une quelconque ou plusieurs des revendications précédentes, **caractérisé en ce que** le capteur (13) est disposé dans une zone du dispositif de séparateur (1) située en aval du séparateur de graisse (2) dans la direction d'écoulement des eaux usées (6), en particulier au niveau d'une sortie (16) du séparateur de graisse, d'une arrivée (17) du bassin de prélèvement et/ou d'un tube de liaison (15) qui relie le séparateur de graisse (2) au bassin de prélèvement (3).

4. Dispositif de séparateur selon l'une quelconque ou plusieurs des revendications précédentes, **caractérisé en ce que** le capteur (13) est disposé dans un espace intérieur (18) du bassin de prélèvement (3), dans lequel l'espace intérieur (18) du bassin de prélèvement (3) est de préférence divisé par une paroi (19) en un espace d'arrivée (20), dans lequel les eaux usées (6) provenant du séparateur de graisse (2) peuvent être introduites par l'intermédiaire de l'arrivée (17) de bassin de prélèvement, et un espace de prélèvement (21), à partir duquel les eaux usées (7) épurées peut être évacuées par l'intermédiaire de la sortie (28) de bassin de prélèvement.

5. Dispositif de séparateur selon la revendication précédente, **caractérisé en ce que** la paroi (19) comporte, en particulier dans sa partie inférieure, une ouverture de communication (22) entre l'espace d'arrivée (20) et l'espace de prélèvement (21).

6. Dispositif de séparateur selon la revendication précédente, **caractérisé en ce que** l'ouverture de communication (22) est réalisée sous la forme d'un dispositif d'étranglement (23), de sorte qu'un niveau d'espace d'arrivée des eaux usées (6) peut augmenter en fonction du débit volumique (V) par rapport à un niveau d'espace de prélèvement des eaux usées (6).

7. Dispositif de séparateur selon l'une quelconque ou plusieurs des revendications 4 à 6 précédentes, **caractérisé en ce que** le capteur (13) est disposé dans l'espace d'arrivée (20) et/ou l'espace de prélèvement (21).

8. Dispositif de séparateur selon l'une quelconque ou plusieurs des revendications précédentes, **caractérisé en ce que** le capteur (13) et/ou l'unité de commande (14) est/sont conçu(s) de sorte que le débit volumique (V) et/ou la valeur de pH peut/peuvent être mesuré(s) directement par le capteur (13) ou
peut/peuvent être déterminé(s) indirectement par l'unité de commande (14) à l'aide d'une valeur de capteur transmise par le capteur (13).

9. Dispositif de séparateur selon l'une quelconque ou plusieurs des revendications précédentes, **caractérisé en ce que** le dispositif de séparateur (1) comporte une pompe de retour (25) avec laquelle les eaux usées (7) peuvent être pompées du bassin de prélèvement (3) dans la conduite de retour (9), dans lequel la pompe de retour (25) peut de préférence être commandée par l'unité de commande (14), en particulier en fonction du débit volumique (V), de la valeur de pH et/ou du niveau de l'espace de prélèvement dans le bassin de prélèvement (3).

10. Dispositif de séparateur selon l'une quelconque ou plusieurs des revendications précédentes, **caractérisé en ce que** l'unité de commande (14) est conçue de sorte qu'elle met en marche le dispositif de dosage (12) et/ou la pompe de retour (25) en cas d'écart en plus par rapport à une première valeur seuil du capteur (13), et qu'elle arrête celui-ci/celle-ci/ceux-ci en cas d'écart en moins par rapport à une deuxième valeur seuil du capteur (13), dans lequel la deuxième valeur seuil du capteur est inférieure à la première valeur seuil du capteur.

11. Dispositif de séparateur selon l'une quelconque ou plusieurs des revendications précédentes, caractérisé en ce qu'un débit volumique de pompe de la pompe de retour (25) est mémorisé dans l'unité de commande (14), et/ou
en ce que l'unité de commande (14) est conçue de sorte qu'elle soustrait, après l'écart en plus par rapport à la première valeur seuil du capteur (13), le débit volumique de pompe mémorisé du débit volumique (V) détecté par capteur pour déterminer un débit volumique corrigé.

12. Dispositif de séparateur selon l'une quelconque ou plusieurs des revendications précédentes, **caractérisé en ce que** le dispositif de séparateur (1) comporte une chambre de turbulence (24) disposée dans la conduite de retour (9).

13. Dispositif de séparateur selon l'une quelconque ou plusieurs des revendications précédentes, **caractérisé en ce que** le dispositif de dosage (12) est conçu de sorte qu'il introduit le réactif (11) dans la conduite de retour (9) ou dans la chambre de turbulence (24).

14. Dispositif de séparateur selon l'une quelconque ou plusieurs des revendications précédentes, **caractérisé en ce que** le dispositif de séparateur (1) comporte un étranglement de débit (27) disposé dans la conduite de retour (9) et/ou dans la chambre de turbulence (24), au moyen duquel des turbulences peuvent être générées pour mélanger le réactif (11) avec les eaux usées (10) recyclées.

15. Procédé pour exploiter un dispositif de séparateur (1) pour la pré-épuration côté bâtiment d'eaux usées (6) avant leur introduction dans un système de canalisation public,
dans lequel des eaux usées (6) sont introduites dans un séparateur de graisse (2),
les eaux usées (6) sont introduites dans un bassin de prélèvement (3) situé en aval du séparateur de graisse (2) dans la direction d'écoulement des eaux usées (6) et
les eaux usées (7) épurées provenant du bassin de prélèvement (3) sont introduites dans le système de canalisation public,
dans lequel une partie des eaux usées épurées est renvoyée au séparateur de graisse (2) à partir du bassin de prélèvement (3) via une conduite de retour et
dans lequel un réactif (11) pour la précipitation et/ou la floculation est ajouté aux eaux usées (10) recyclées par l'intermédiaire d'un dispositif de dosage (12),
dans lequel le procédé est mis en oeuvre avec un dispositif de séparateur (1) selon l'une quelconque ou plusieurs des revendications précédentes.
